# EUROPEAN PATENT APPLICATION

(11) **EP 4 729 747 A1**
(43) Date of publication of application: **22.04.2026**
(21) Application number: 25209190.5
(22) Date of filing: 16.10.2025
(51) Int. Cl.: F01D 25/12, F01D 25/28, B32B 18/00, C04B 35/80, C04B 37/00

(54) **CMC COMPONENT WITH COOLING CAVITY COVER PLATE**

(30) Priority: 16.10.2024 US 202418917255
(71) Applicant: RTX Corporation, Farmington, CT 06032 (US)
(72) Inventor: WILKINS, Peter, Manchester 06040 (US); SMIDDY, Winston, South Windsor 06074 (US); GAO, Cheng, South Glastonbury 06073 (US); LILES, Howard J., Newington 06111 (US); WASSERMAN, David J., Hamden 06517 (US); MILLER, Andrew S., Marlborough 06447 (US)
(74) Representative: Dehns

(57) **Abstract**

The disclosure describes a ceramic matrix composite (CMC) component having a cooling cavity (130). The CMC component has a base (105) having a bottom inner surface (120) and a top outer surface (110), in which the base (105) is made from a plurality of ceramic fiber plies within a matrix. A cooling cavity (130) is provided within the base (105) in which the cooling cavity (130; 235) has an opening in the top outer surface (110) of the base (105). A cover plate (140) made from one or more ceramic fiber plies within a matrix is provided to close the opening of the cooling cavity (130). The cover plate (140) is bonded to the base (105) by simultaneous densification of the base (105) and cooling cavity (130).

## Description

### FIELD OF THE INVENTION

The present disclosure relates generally to methods for manufacturing ceramic matrix composites (CMCs). In particular, the present disclosure concerns manufacturing CMC components with internal cooling cavities.

### BACKGROUND OF THE INVENTION

Gas turbine engines or jet engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (flow path components). Therefore, it is desirable that such components be made of heat resistant materials such as ceramic matrix composites (CMCs). CMC components can withstand much higher operating temperatures than components composed of superalloys. However, CMC components have comparably lower thermal conductivity. To increase their operational lifespans, precautions can be taken to cool CMC components by subjecting the components to a flow of cooling fluid (e.g., air).

To provide cooling of CMC components, secondary air flows, i.e., secondary to the main flow of high-energy, high temperature gas, can be used to cool components of the gas turbine engines that are exposed to high temperatures as well as to prevent high temperature gas from reaching those components that are not directly exposed to the hot gas flow. To facilitate the cooling of the CMC components, cavities can be provided within the components themselves to allow secondary cooling air to flow one region of the turbine. For example, a component such as a blade outer air seal (BOAS) can be provided with an internal cooling cavity to allow cooling air to flow a region between the engine casing and the outer radial surface of the BOAS into the internal cooling cavity of the BOAS to cool the interior of the component and thereby reduce its thermal deterioration due to exposure to the hot gas path.

There is thus a continuing need for alternative and/or improved manufacturing methods for providing cooling structures such as cavities to allow for cooling of CMC components exposed to high temperature gas flow, for example, BOAS.

### SUMMARY OF THE INVENTION

In general, the present disclosure relates to methods for introducing cooling cavities into CMC components. In particular, the present disclosure relates to producing an open cooling cavity within a CMC component, and closing the cooling cavity by bonding a cover plate to the CMC component.

The present disclosure is directed, in a first aspect, to a ceramic matrix composite (CMC) component having:
a base having a bottom inner surface and a top outer surface, the base comprising a plurality of ceramic fiber plies within a matrix,
a cooling cavity within the base having an opening in the top outer surface of the base, and
a cover plate comprising one or more ceramic fiber plies within a matrix covering the opening of the cooling cavity wherein the cover plate is bonded to the base by simultaneous densification of the base and cooling cavity.

In yet another embodiment, the present disclosure is directed to a method of preparing a CMC component comprising:
laying up a plurality of ceramic fiber plies to form a CMC preform having a bottom inner surface and a top outer surface,
laying up one or more ceramic fiber plies to form a cover plate,
before or after subjecting the CMC preform to densification, forming a cooling cavity within the CMC preform, the cooling cavity having an opening in the top outer surface of the CMC preform,
positioning the cover plate on the CMC preform to cover the opening of the cooling cavity, and
subjecting the CMC preform and cover plate to densification to form a ceramic matrix composite component wherein the cover plate is bonded to the CMC preform.

In yet another embodiment, the present disclosure is directed to a gas turbine engine having:
a fan section, a compressor section, a combustion chamber, and a turbine section, the turbine section including at least one rotor and one or more turbine blade(s) extending radially outwardly from the at least one rotor;
a blade outer air seal assembly positioned between the one or more turbine blade(s) and an outer casing to the engine;
the blade outer air seal is formed of a plurality blade outer air seal segments, wherein each blade outer air seal segment comprises
a base having a bottom inner surface and a top outer surface, the base comprising a plurality of ceramic fiber plies within a matrix,
a cooling cavity within the base having an opening in the top outer surface of the base, and
a cover plate comprising a plurality of ceramic fiber plies within a matrix covering the opening of the cooling cavity wherein the cover plate is bonded to the base by simultaneous densification of the base and cooling cavity.

In further embodiments of the present disclosure, including further embodiments of the above exemplary embodiments, the cover plate is flush with the top outer surface of the base.

In further embodiments of the present disclosure, including further embodiments of the above exemplary embodiments, the cover plate is positioned on top of the top outer surface of the base.

In further embodiments of the present disclosure, including further embodiments of the above exemplary embodiments, the base is a ceramic matrix composite containing SiC fiber plies within an SiC matrix, and the cover plate is a ceramic matrix composite containing SiC fiber plies within an SiC matrix.

In further embodiments of the present disclosure, including further embodiments of the above exemplary embodiments, the cooling cavity within the base is provided with guide walls to guide a flow of cooling fluid through the cooling cavity.

In further embodiments of the present disclosure, including further embodiments of the above exemplary embodiments, the cover plate is provided with guide walls that extend into the cooling cavity to guide a flow of cooling fluid through the cooling cavity.

In further embodiments of the present disclosure, including further embodiments of the above exemplary embodiments, the component is a blade outer air seal (BOAS), combustion liner, turbine blade, or turbine vane.

In further embodiments of the present disclosure, including further embodiments of the above exemplary embodiments, the component is a blade outer air seal (BOAS) segment.

In further embodiments of the present disclosure, including further embodiments of the above exemplary embodiments, the component is BOAS assembly comprising a plurality of BOAS segments arranged to form an annular shaped structure.

In further embodiments of the present disclosure, including further embodiments of the above exemplary embodiments, pre-densification is performed by chemical vapor infiltration of SiC.

In further embodiments of the present disclosure, including further embodiments of the above exemplary embodiments, the cooling cavity of the CMC preform is formed during the laying up of the plurality of ceramic fiber plies to form the CMC preform.

In further embodiments of the present disclosure, including further embodiments of the above exemplary embodiments, before positioning of the cover plate on the CMC preform, the CMC preform is subjected to a pre-densification and the cooling cavity is formed in the pre-densified CMC preform by machining.

In further embodiments of the present disclosure, including further embodiments of the above exemplary embodiments, before positioning of the cover plate on the CMC preform, the CMC preform and/or the cover plate are subjected to a pre-densification.

In further embodiments of the present disclosure, including further embodiments of the above exemplary embodiments, before positioning of the cover plate on the CMC preform, the CMC preform and the cover plate are both subjected to a pre-densification.

In further embodiments of the present disclosure, including further embodiments of the above exemplary embodiments, the shape of the cooling cavity is maintained during the pre-densification using tooling or a fugitive material.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Fig. 1 schematically illustrates a partial cross section of an exemplary gas turbine engine.
Fig. 2 is a schematic illustration of a cross section of a blade outer air seal (BOAS) having a cooling cavity and a cover plate for closing the cooling cavity.
Fig. 3 is a schematic illustration of the BOAS of Fig. 2 with the cover plate in position to close the cooling cavity.
Fig. 4 is schematic illustration of a cross section of another embodiment of BOAS with cooling cavity and cover plate for closing the cooling cavity.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

While the discussion below often makes reference to BOAS and BOAS segments, it should be recognized that the present disclosure is not limited to BOAS but includes any CMC component for which a cooling cavity is desirable, for example, combustion liners and turbine blades and vanes.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

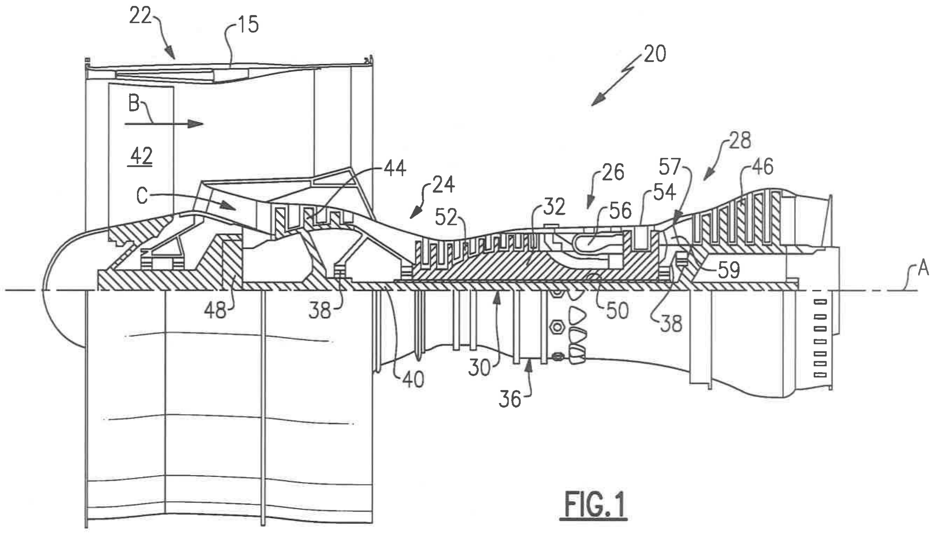

Fig. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although Fig. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

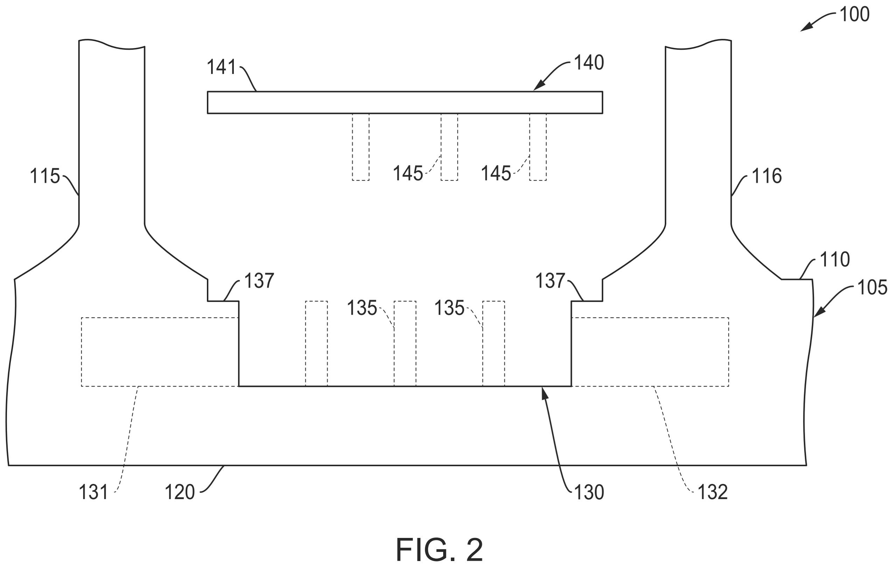

Fig. 2 illustrates a cross section of a BOAS segment 100. In this embodiment, the BOAS segment 100 includes a base 105 having a radial outer surface or top surface 110 that faces an outer casing of the engine and a radial inner surface or bottom surface 120 that faces the interior of the turbine section and is exposed to the flow of hot gases. The base 105 is a CMC formed from a plurality of stacked ceramic a plurality of unidimensional fabric layers or stacked tapes (e.g., made from SiC fibers) within a ceramic matrix (e.g., an SiC matrix), two-dimensional woven fiber plies in a ceramic matrix or from a three-dimensional weave of fibers or fiber tows within a ceramic matrix. The CMC can also be formed from other fiber/matrix combinations such as C/C, C/Si, and alumina/alumina.

As shown in Fig. 2, the BOAS segment 100 further includes two flanges 115 and 116 that extend radially from the outer surface 110 of the segment 100. These flanges 115 and 116 are load bearing features and provide structures for attaching the segment 100 to the outer casing of the engine. In this embodiment flange 115 is the forward flange (i.e., closest to the front of the engine) and flange 116 is the aft flange (i.e., closest to the rear of the engine). Each flange 115 and 116 can be formed, for example, as a Y-weave of a plurality of ceramic fiber plies.

As shown in Fig. 2, the base 105 of segment 100 is provided with an open cooling cavity 130. The cooling cavity can be formed prior to densification of the CMC preform by precutting the fiber plies that are to be laid up to form the preform with a cavity or by cutting (machining) the cavity into the preform once the plies are laid up. Alternatively, the cooling cavity can be created by machining after an initial pre-densification, such as by chemical vapor infiltration (CVI). Completion of the densification will follow the positioning of the cover plate, or can be created after densification is complete by machining the densified preform.

As showed by dashed lines indicating regions 131 and 132, the cooling cavity 130 can extend beneath the flanges 115 and 116 to provide more cooling of the internal region of the component. Additionally, as shown with dashed lines, the cooling cavity can also be provided with optional internal guide walls 135 to guide the flow of cooling air through the cooling cavity 130. These guide walls can be made by machining the base 105 after densification or pre-densification, or they can be formed during layup and held in position by tooling of fugitive materials during densification or pre-densification.

Also shown in Fig. 2 is a cover plate 140 which will be positioned to close the open cooling cavity 130. The cover plate can be, optionally, provided with optional internal guide walls 145 which, like optional guide walls 135, can guide the flow of cooling air through the cooling cavity 130. The guide walls 135 and 145 can be used individually or together to provide passages within the cooling cavity 130. As shown in Fig. 2, in the area of the opening into cooling cavity 130, sidewall(s) of the cooling cavity 130 is provided with a shoulder 137 which is below the level of the top outer surface 110 of the CMC preform. When placed into position to close the opening of the cooling cavity 130, cover plate 140 can rest on shoulder 137. In this way, when placed into position, it is possible for the top surface 141 of cover plate 140 to be flush with the outer surface 110 of the component. Like the component itself, the cover plate 140 can be made from CMC materials such as a one or more densified two-dimensional fiber plies. The walls 145 can be made by machining after densification or pre-densification, or they can be formed during layup of the cover plate and held in position by tooling of fugitive materials during densification or pre-densification.

In operation, cooling air from the region above outer surface 110 can flow into the cooling cavity 130 via one or more cooling inlet(s) (not shown) in, for example, the outer surface 110. The cooling air can then circulate through the cooling cavity 130, for example, guided by guide walls 135/145, and exit the cooling cavity 130 via one or more cooling outlet(s) (not shown) in, for example, the bottom surface 120, i.e., the surface exposed to the hot gas flow. Alternatively, cooling outlet(s) could be formed in the radially aligned side wall(s) of the BOAS segment to provide an intersegment purge or cooling flow between adjacent segments.

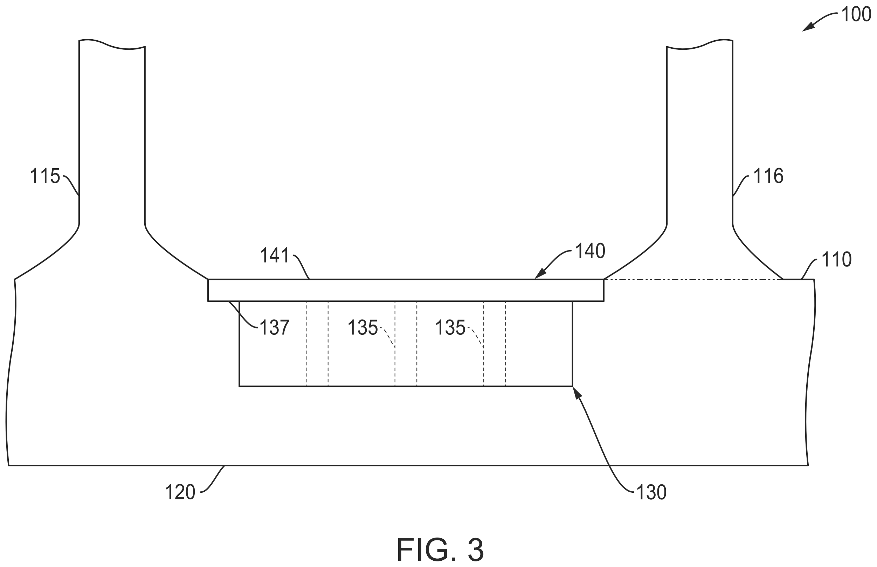

Fig. 3 shows the embodiment of Fig. 2 with the cover plate 140 in position to close the opening of the cooling cavity. As shown, the cover plate 140 rests on the shoulder 137 around the previously open cooling cavity 130 to close the opening. The top surface of cover plate 140 is flush with the outer surface 110 of the component. In this depiction, the optional guide walls extending from cover plate 140 are not shown.

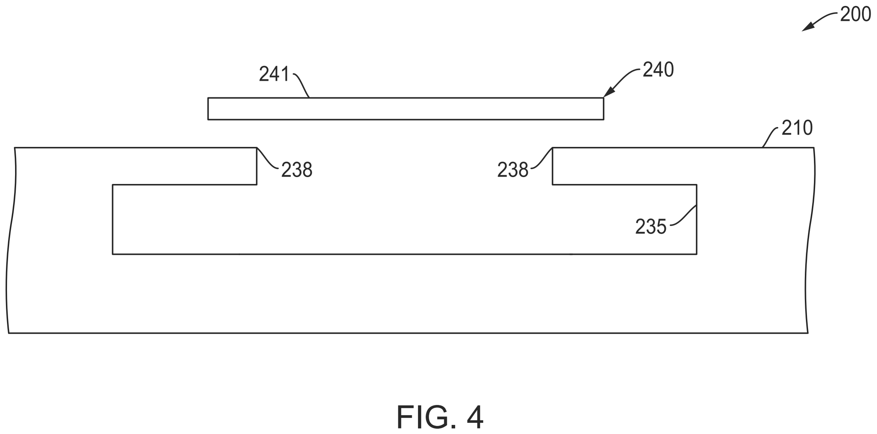

Fig. 4 illustrates a partial cross section of another embodiment of BOAS segment in accordance with an embodiment of the present disclosure. In this embodiment, the BOAS segment 200 has ledge 238 around the perimeter of the open cooling cavity 235. When the cover plate 240 is placed into position to close open cooling cavity 235 the cover plate will rest on the is ledge 238. Thus, in this embodiment, the top surface 241 of the cover plate will not be flush with the top surface 210 the component. Although not shown in this embodiment, it should be understood that the cooling cavity 235 can be provided with guide walls like guide walls 135/145 shown in Fig. 2.

To prepare the component with cover plate, the component can be made from a CMC preform which is then densified using known methods. The cooling cavity can be formed prior to any densification of the CMC preform by precutting the fiber plies during layup to form the preform with a cavity or by forming the preform and then machining the cavity into the preform prior to any densification. Alternatively, as noted above, the cooling cavity can be created by machining after an initial pre-densification, or by machining the densified preform after completion of densification.

For example, the CMC preform of the component can be prepared by stacking (laying up) two-dimensional fiber plies containing woven ceramic fibers (e.g., SiC fibers or fiber tows) within a binder. These plies can be precut to allow for formation of the open cooling cavity during layup of the fiber plies to form the preform. The preform with its cooling cavity can the be subjected to an initial pre-densification, such as by chemical vapor infiltration (CVI). Completion of the densification will follow the positioning of the cover plate.

Optionally, materials can be used to maintain the shape of the cooling cavity and any structural features thereof (e.g., guide walls) during pre-densification. These materials can be tooling or fugitive materials that will be removed by heat treatment following densification.

The cover plate can also be made by stacking two-dimensional fiber plies containing woven ceramic fibers (e.g., SiC fibers or fiber tows) within a binder. As with the CMC preform of the component, following layup the cover plate is subjected to pre-densification, such as by CVI, separate from the pre-densification of the CMC preform. Here again, optionally, materials can be used to maintain the shape of the cover plate and any structural features thereof (e.g., guide walls) during pre-densification. These materials can be tooling or fugitive materials (e.g., graphite) that will be removed by heat treatment following densification.

Thereafter, the cover plate is placed into position to close the open cooling cavity. Such closure can, for example, result with the top surface of the cover plate being flush with the surface of the component (as shown in Figs. 2-3) or the cover plate can overlay the opening of the cooling cavity so that it rests on the surface of the component (as shown in Fig. 4). Once into position, the pre-densified CMC preform with cover plate are subjected to further densification (e.g., CVI) to bond the cover plate to the component.

In another embodiment, the CMC preform and the cover plate are not separately pre-densified. Instead, the CMC preform and cover plate are each prepared by stacking (laying up) two-dimensional fiber plies containing woven ceramic fibers (e.g., SiC fibers or fiber tows) within a binder. These plies for the CMC preform are precut to form the open cooling cavity during layup, and then the cover plate is placed into position to close the open cooling cavity. The CMC preform and cover plate can then together subject to densification (e.g., by CVI) wherein the two parts are densified and the cover plate is bonded to the CMC pre-form, of the component. As mentioned above, the shape of the cooling cavity and any associated structures can optionally be maintained during densification using tooling or fugitive materials.

In another embodiment, the CMC preform is initially prepared without a cooling cavity and subjected to pre-densification. Thereafter, the cooling cavity is formed by machining, and then the cover plate is placed into position and the pre-densified CMC preform with cover plate are subjected to further densification to bond the cover plate to the component.

In another embodiment, the component with cooling cavity and cover plate are formed as described above, with the cooling cavity being formed prior to or after pre-densification. Thereafter, the cover plate is placed into position and then covered with further fiber plies, and the combined structure is then subjected to further densification. This method aspect may provide a stronger and possibly less permeable bonding of the cover plate to the pre-densified CMC preform.

To permit ingress of cooling fluid into the cooling cavity, as mentioned above, one or more cooling inlet(s) can be provided to allow external cooling air to enter into the cooling cavity positioned in the interior of the component (e.g., BOAS segment). Similarly, to provide for egress of the cooling fluid, one or more cooling outlet(s) can be provided. The cooling inlet(s) and/or cooling outlet(s) provide for fluid communication between the exterior of the component and the internal cooling cavity. The cooling inlet(s)/outlet(s) can pass from the exterior of the component, through a section of the base, and into the cooling cavity. Alternatively, the cooling inlet(s)/outlet(s) can pass from the exterior of the component, through a section of the cover plate, and into the cooling cavity.

Such cooling inlet(s)/outlet(s) can be made, for example, by drilling or other machining after predensification or after complete densification. Alternatively, or additionally, one of more cooling inlet(s) can be made during the layup process. For example, the cooling inlet(s)/outlet(s) can be formed during the layup process by positioning, e.g., insertion, of tooling or fugitive material. The tooling or fugitive material can then be removed after densification.

Fugitive material used for use in shaping the cooling cavity and/or the cooling inlet(s)/outlet(s) can be removed by the heating the composite to the melting temperature/vaporization temperature of the fugitive material or by use of an appropriate solvent to dissolve the fugitive material. For example, when using graphite as a fugitive material the graphite can be vaporized by exposure to oxygen at elevated temperature, for example, above 800°F (427°C).

The present disclosure provides an efficient method for forming cooling cavities beneath radial flanges. These cooling cavities provide a means for effectively cooling the interior of CMC components exhibiting flanges and thereby reduce the formation of thermal gradients at regions of high thickness and in turn reduce through-thickness and in-plane thermal stresses.

The corresponding structures, material, acts, and equivalents of all means or steps plus function elements in the claims below are intended to include any structure, material, or act for performing the function in combination with other claimed elements are specifically claimed. The above description of the present invention has been presented for purposes of illustration and description, but is not intended to be exhaustive or limited to the invention in the form disclosed. Many modifications and variations will be apparent to those of ordinary skill without departing from the scope and spirit of the invention. The specific embodiment(s) described above were chosen and described in order to explain principles of the invention and the practical applications thereof, and to enable others of ordinary skill in the art to understand the invention for embodiments with various modifications as are suited to the particular use contemplated.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A ceramic matrix composite (CMC) component comprising:
a base (105) having a bottom inner surface (120) and a top outer surface (110; 210), the base (105) comprising a plurality of ceramic fiber plies within a matrix,
a cooling cavity (130; 235) within the base (105) having an opening in the top outer surface (110; 210) of the base (105), and
a cover plate (140; 240) comprising one or more ceramic fiber plies within a matrix covering the opening of the cooling cavity (130; 235) wherein the cover plate (140; 240) is bonded to the base (105) by simultaneous densification of the base (105) and cooling cavity (130; 235).

2. The CMC component according to claim 1, wherein:
the cover plate (140; 240) is flush with the top outer surface (110; 210) of the base (105); and/or
the cover plate (140; 240) is positioned on top of the top outer surface (110; 210) of the base (105).

3. The CMC component according to claim 1 or 2, wherein the base (105) is a ceramic matrix composite containing SiC fiber plies within an SiC matrix, and the cover plate (140; 240) is a ceramic matrix composite containing SiC fiber plies within an SiC matrix.

4. The CMC component according to any preceding claim, wherein the cooling cavity (130; 235) within the base (105) is provided with guide walls (135) to guide a flow of cooling fluid through the cooling cavity (130; 235).

5. The CMC component according to any preceding claim, wherein the cover plate (140; 240) is provided with guide walls (145) that extend into the cooling cavity (130; 235) to guide a flow of cooling fluid through the cooling cavity (130; 235).

6. The CMC component according to any preceding claim, wherein the component is a blade outer air seal (BOAS), a BOAS segment, combustion liner, turbine blade, or turbine vane.

7. A BOAS assembly comprising a plurality of BOAS segments according claim 6, wherein said BOAS segments are arranged to form an annular shaped structure.

8. A method of preparing a CMC component comprising:
laying up a plurality of ceramic fiber plies to form a CMC preform having a bottom inner surface (120) and a top outer surface (110; 210),
laying up one or more ceramic fiber plies to form a cover plate (140; 240),
before or after subjecting the CMC preform to densification, forming a cooling cavity (130; 235) within the CMC preform, the cooling cavity (130; 235) having an opening in the top outer surface (110; 210) of the CMC preform,
positioning the cover plate (140; 240) on the CMC preform to cover the opening of the cooling cavity (130; 235), and
subjecting the CMC preform and cover plate (140; 240) to densification to form a ceramic matrix composite component wherein the cover plate (140; 240) is bonded to the CMC preform.

9. The method according to claim 8, wherein pre-densification is performed by chemical vapor infiltration of SiC.

10. The method according to claim 8 or 9, wherein the cooling cavity (130; 235) of the CMC preform is formed during the laying up of the plurality of ceramic fiber plies to form the CMC preform.

11. The method according to claim 8, 9 or 10, wherein, before positioning of the cover plate (140; 240) on the CMC preform, the CMC preform is subjected to a pre-densification and the cooling cavity (130; 235) is formed in the pre-densified CMC preform by machining.

12. The method according to any of claims 8 to 11, wherein, before positioning of the cover plate (140; 240) on the CMC preform, the CMC preform and/or the cover plate (140; 240) are subjected to a pre-densification.

13. The method according to any of claims 8 to 12, wherein:
the cooling cavity (130; 235) is provided with guide walls (135) for guiding a flow of cooling fluid through the cooling cavity (130; 235); and/or
the cover plate (140; 240) is provided with guide walls (145) that extend into the cooling cavity (130; 235) for guiding a flow of cooling fluid through the cooling cavity (130; 235); and/or
after positioning of the cover plate (140; 240) on the CMC preform, the cover plate (140; 240) is flush with the top outer surface (110; 210) of the CMC preform; and/or
after positioning of the cover plate (140; 240) on the CMC preform, the cover plate (140; 240) is on the top outer surface (110; 210) of the CMC preform.

14. The method according to any of claims 8 to 13, wherein the shape of the cooling cavity (130; 235) is maintained during the pre-densification using tooling or a fugitive material.

15. A gas turbine engine (20) comprising:
a fan section (22), a compressor section (24), a combustion chamber (26), and a turbine section (28), said turbine section (28) including at least one rotor and one or more turbine blade(s) extending radially outwardly from said at least one rotor;
a blade outer air seal assembly positioned between the one or more turbine blade(s) and an outer casing to the engine (20);
said blade outer air seal is formed of a plurality blade outer air seal segments (100), wherein each blade outer air seal segment (100) comprises:
a base (105) having a bottom inner surface (120) and a top outer surface (110; 210), the base (105) comprising a plurality of ceramic fiber plies within a matrix,
a cooling cavity (130; 235) within the base (105) having an opening in the top outer surface (110; 210) of the base (105), and
a cover plate (140; 240) comprising a plurality of ceramic fiber plies within a matrix covering the opening of the cooling cavity (130; 235) wherein the cover plate (140; 240) is bonded to the base (105) by simultaneous densification of the base (105) and cooling cavity (130; 235).
